# EUROPEAN PATENT APPLICATION

(11) **EP 4 343 647 A1**
(43) Date of publication of application: **27.03.2024**
(21) Application number: 22196467.9
(22) Date of filing: 20.09.2022
(51) Int. Cl.: G06Q 10/0631

(54) **TASK SCHEDULING SYSTEM FOR SPECTRUM MONITORING**

(71) Applicant: Rohde & Schwarz GmbH & Co. KG, 81671 München (DE)
(72) Inventor: Guezelarslan, Baris, Dr.-Ing., 85521 Ottobrunn (DE)
(74) Representative: Rupp, Christian

(57) **Abstract**

A method for planning spectrum monitoring tasks is provided. Said method comprises the steps of entering (100) at least one monitoring event and/or action into a planning structure, and creating (101) at least one rule and/or command on the basis of the at least one monitoring event and/or action.

## Description

The invention relates to a method for planning (scheduling) monitoring tasks in the context of spectrum monitoring, a graphical user interface for planning monitoring tasks in the context of spectrum monitoring, a scheduling system for planning monitoring tasks in the context of spectrum monitoring, and a system for planning monitoring tasks in the context of spectrum monitoring, especially a system for planning monitoring tasks in the context of spectrum monitoring and performing spectrum monitoring.

Generally, in times of an increasing number of communication applications providing wireless connectivity capabilities, there is a growing need of a method for planning monitoring tasks in the context of spectrum monitoring, a graphical user interface for planning monitoring tasks in the context of spectrum monitoring, a scheduling system for planning monitoring tasks in the context of spectrum monitoring, and a system for planning monitoring tasks in the context of spectrum monitoring with respect to such applications in order to verify their correct functioning especially in an accurate, efficient, and simple manner.

However, typical planning in the context of spectrum monitoring assumes that the customer or operator, respectively, is a query expert due to the disadvantage of a high complexity of planning. Further disadvantageously, the customer or operator, respectively, needs to visualize all spectra, especially recurring spectra, mentally. It is also disadvantageous that the customer or operator, respectively, needs a lot of trial and error attempts for getting the desired results. As it can be seen, typical planning in the context of spectrum monitoring is inaccurate, inefficient, and complex.

Accordingly, there is the object to provide a method for planning monitoring tasks in the context of spectrum monitoring, a graphical user interface for planning monitoring tasks in the context of spectrum monitoring, a scheduling system for planning monitoring tasks in the context of spectrum monitoring, and a system for planning monitoring tasks in the context of spectrum monitoring, thereby ensuring a high accuracy, efficiency, and simplicity.

This object is solved by the features of claim 1 for a method for planning (scheduling programming) spectrum monitoring tasks, the features of claim 12 for a graphical user interface for planning (scheduling) spectrum monitoring tasks, the features of claim 13 for a spectrum monitoring scheduling system, and the features of claim 15 for a system for scheduling spectrum monitoring tasks. The dependent claims contain further developments.

According to a first aspect of the invention, a method for planning monitoring tasks in the context of spectrum monitoring is provided. Said method comprises the steps of entering at least one monitoring event and/or action into a planning structure, and creating at least one rule and/or command on the basis of the at least one monitoring event and/or action. Advantageously, a high accuracy, efficiency, and simplicity can be ensured. Further advantageously, the customer or operator, respectively, no longer has to program any query, exemplary any SQL query, or script. Preferably, the customer or operator, respectively, can simply set the corresponding rules visually in the planning structure. As a further advantage, the at least one rule and/or command can be script-based, comprising especially at least one Boolean link and/or conditional function.

According to a first preferred implementation form of the first aspect of the invention, the planning structure comprises or is a visual planning structure, preferably a visual planning structure with time structuring, more preferably a calendar-like visual planning structure, most preferably a calendar. Advantageously, for instance, this allows for days, months, or hourly display, and thus also for an efficient and simple comparison for the human eye and/or brain. In this context, it is particularly advantageous that a temporal structuring into days, weeks and hours is familiar to the human brain.

According to a second preferred implementation form of the first aspect of the invention, the method further comprises the step of providing the at least one rule and/or command for a monitoring device or system, wherein the at least one rule and/or command is preferably translated into a script or machine readable code especially in an automatic manner. Advantageously, for example, complexity can further be reduced, thereby increasing efficiency.

According to a further preferred implementation form of the first aspect of the invention, the at least one rule and/or command comprises or is a definition which signal or signals will be recorded in the context of spectrum monitoring. Advantageously, for instance, a whitelist or a kind thereof can be compiled in an accurate, efficient, and simple manner.

According to a further preferred implementation form of the first aspect of the invention, the at least one rule and/or command comprises or is a definition which signal or signals will be ignored in the context of spectrum monitoring. Advantageously, for example, a blacklist or a kind thereof can be compiled in an accurate, efficient, and simple manner.

According to a further preferred implementation form of the first aspect of the invention, the at least one rule and/or command comprises or is a definition which signal or signals in the context of spectrum monitoring will trigger an alarm preferably due to anomalies or deviations from a corresponding signal definition especially input by the respective operator. Advantageously, for instance, visual anomaly detection with or without employing artificial intelligence is also possible, as the customer or operator, respectively, can very easily select which spectrogram snippets should be taken into account preferably by choosing respective hours, days, months, or years.

According to a further preferred implementation form of the first aspect of the invention, the method further comprises the step of recording at least one signal in the context of spectrum monitoring for a predefined period of time as recorded results especially on the basis of the at least one monitoring event and/or action. Advantageously, for example, instead of or in addition to the at least one monitoring event and/or action, the at least one rule and/or command can be used, thereby ensuring a high flexibility, and thus also a high efficiency.

According to a further preferred implementation form of the first aspect of the invention, the method further comprises the step of viewing the recorded results. Additionally or alternatively, the method further comprises the step of deciding which of the recorded results are to be further processed in which manner. Advantageously, for instance, resources, such as resources with respect to storage space and processing power, can be used in a highly efficient manner.

According to a further preferred implementation form of the first aspect of the invention, the method further comprises the step of loading at least one of the at least one monitoring event and/or action from operator and/or manufacturer records. Advantageously, for example, instead of or in addition to the at least one monitoring event and/or action, the at least one rule and/or command can be used, which leads to a high flexibility, and thus also a high efficiency.

According to a further preferred implementation form of the first aspect of the invention, the method further comprises the step of preprocessing and/or reprocessing at least one of the at least one monitoring event and/or action especially with the aid of a system and/or a device and/or an operator. Advantageously, for instance, especially in this context, the method may comprise the step of employing a detector, preferably an energy detector, more preferably a deep detector, most preferably an artificial intelligence assisted deep detector, to automatically propose and/or set the events to be monitored, which leads to a reduced complexity. Further advantageously, instead of or in addition to the at least one monitoring event and/or action, the at least one rule and/or command can be used, thereby ensuring a high flexibility, and thus also a high efficiency.

According to a further preferred implementation form of the first aspect of the invention, the method further comprises the step of employing a server, preferably a tile server, to simplify and/or accelerate display of the respective spectrum and/or spectrogram information. Advantageously, for example, said server can especially be a spectrogram tile server, thereby further increasing efficiency.

According to a second aspect of the invention, a graphical user interface for planning monitoring tasks in the context of spectrum monitoring is provided. Said graphical user interface is configured to support and/or perform at least one of the steps of the method according to the first aspect of the invention or its preferred implementation forms, respectively. It is noted that said graphical user interface may preferably comprise the above-mentioned planning structure. Advantageously, a high accuracy, efficiency, and simplicity can be ensured. Further advantageously, the customer or operator, respectively, no longer has to program any query, exemplary any SQL query, or script. Preferably, the customer or operator, respectively, can simply set the corresponding rules visually in the planning structure or graphical user interface, respectively.

According to a third aspect of the invention, a scheduling system for planning monitoring tasks in the context of spectrum monitoring is provided. Said scheduling system comprises a graphical user interface comprising a planning structure, and a processing module. In this context, the graphical user interface is configured to be entered at least one monitoring event and/or action into the planning structure. In addition to this, the processing module is configured to create at least one rule and/or command on the basis of the at least one monitoring event and/or action. Advantageously, a high accuracy, efficiency, and simplicity can be ensured.

It is noted that said graphical user interface can especially be a graphical user interface according to the second aspect of the invention.

It is further noted that said processing module can especially be configured to support and/or perform at least one of the steps of the method according to the first aspect of the invention or its preferred implementation forms, respectively.

According to a first preferred implementation form of the third aspect of the invention, the graphical user interface is directly coupled to the processing module, preferably the graphical user interface is comprised by display means being directly coupled to the processing module. As an alternative, the graphical user interface is remotely coupled, preferably via a wireless connection and/or a cloud service, to the processing module. Advantageously, for instance, a high flexibility, and thus also a high efficiency, can be ensured.

It is noted that a device, especially a monitoring device, can comprise said processing module.

It is further noted that especially in the case of said direct coupling, a device, exemplarily said monitoring device, can comprise said graphical user interface, preferably display means comprising said graphical user interface.

Moreover, especially in the case of said remote coupling, a computer or a tablet or a smart phone can comprise said graphical user interface, preferably display means comprising said graphical user interface.

According to a fourth aspect of the invention, a system for planning monitoring tasks in the context of spectrum monitoring, especially a system for planning monitoring tasks in the context of spectrum monitoring and performing spectrum monitoring, is provided. Said system comprises a graphical user interface comprising a planning structure, a processing module, and a monitoring device. In this context, the graphical user interface is configured to be entered at least one monitoring event and/or action into the planning structure. In addition to this, the processing module is configured to create at least one rule and/or command on the basis of the at least one monitoring event and/or action. Additionally, the processing module is further configured to provide the at least one rule and/or command for the monitoring device. In further addition to this, the monitoring device is configured to record at least one signal in the context of spectrum monitoring on the basis of the at least one rule and/or command.

Advantageously, a high accuracy, efficiency, and simplicity can be ensured.

It is noted that the graphical user interface can especially be a graphical user interface according to the second aspect of the invention or the third aspect of the invention or preferred implementation forms thereof, respectively.

It is further noted that the processing module can especially be a processing module according to the third aspect of the invention or its preferred implementation forms, respectively.

With respect to the above-mentioned monitoring device, it is noted that said monitoring device can especially be configured to support and/or perform at least one of the steps of the method according to the first aspect of the invention or its preferred implementation forms, respectively.

Exemplary embodiments of the invention are now further explained with respect to the drawings by way of example only, and not for limitation. In the drawings:
- Fig. 1: shows a flow chart of an embodiment of the first aspect of the invention;
- Fig. 2: shows a flow chart of a further embodiment of the inventive method;
- Fig. 3: shows an exemplary graphical user interface for communication with a spectrum monitoring device, in accordance with the second aspect of the invention;
- Fig. 4: illustrates an exemplary benefit with respect to the graphical user interface of Fig. 3;
- Fig. 5: illustrates a further exemplary benefit with respect to the graphical user interface of Fig. 3;
- Fig. 6: illustrates a further exemplary benefit with respect to the graphical user interface of Fig. 3;
- Fig. 7: shows an exemplary embodiment of the inventive scheduling system;
- Fig. 8: shows an exemplary embodiment of the fourth aspect of the invention;
- Fig. 9: shows an exemplary embodiment of a monitoring device in the sense of the invention;
- Fig. 10: shows a further exemplary embodiment of the fourth aspect of the invention; and
- Fig. 11: shows a further exemplary embodiment of the inventive system.

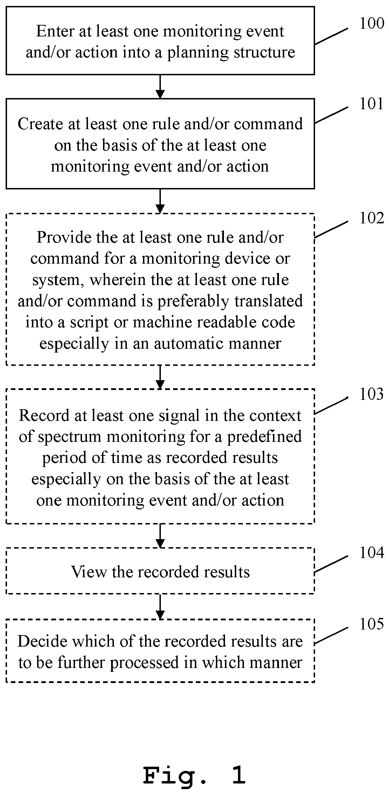

Firstly, Fig. 1 shows a flow chart of an exemplary embodiment of the inventive method for planning monitoring tasks in the context of spectrum monitoring. In a first step 100, at least one monitoring event and/or action is entered into a planning structure. Then, in a second step 101, at least one rule and/or command is created on the basis of the at least one monitoring event and/or action.

It is noted that it might be particularly advantageous if the planning structure comprises or is a visual planning structure, preferably a visual planning structure with time structuring, more preferably a calendar-like visual planning structure, most preferably a calendar.

As it can further be seen from Fig. 1, in accordance with optional step 102, the method may further comprise the step of providing the at least one rule and/or command for a monitoring device or system, wherein the at least one rule and/or command is preferably translated into a script or machine readable code especially in an automatic manner.

It is noted that it might be particularly advantageous if the at least one rule and/or command comprises or is a definition which signal or signals will be recorded in the context of spectrum monitoring.

In addition to this or as an alternative, the at least one rule and/or command may comprise or be a definition which signal or signals will be ignored in the context of spectrum monitoring.

Further additionally or further alternatively, the at least one rule and/or command may comprise or be a definition which signal or signals in the context of spectrum monitoring will trigger an alarm preferably due to anomalies or deviations from a corresponding signal definition especially input by the respective operator.

Moreover, according to optional step 103 of Fig. 1, the method may further comprise the step of recording at least one signal in the context of spectrum monitoring for a predefined period of time as recorded results especially on the basis of the at least one monitoring event and/or action.

Especially in this context, the method may further comprise the step of viewing the recorded results, exemplarily illustrated as optional step 104 of Fig. 1, and/or the step of deciding which of the recorded results are to be further processed in which manner, exemplarily depicted as optional step 105 of Fig. 1.

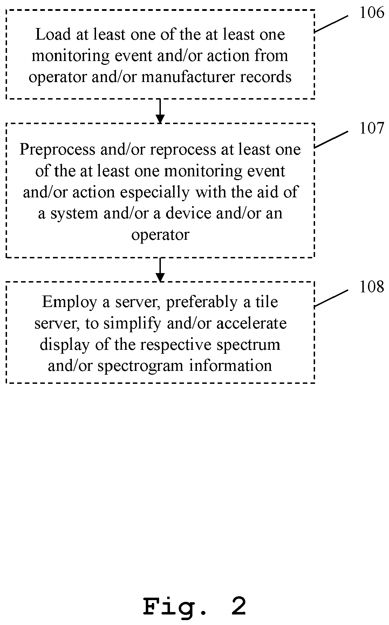

Now, with respect to Fig. 2, according to optional step 106 thereof, the method may further comprise the step of loading at least one of the at least one monitoring event and/or action from operator and/or manufacturer records.

Additionally or alternatively, in accordance with optional step 107 of Fig. 2, the method may further comprise the step of preprocessing and/or reprocessing at least one of the at least one monitoring event and/or action especially with the aid of a system and/or a device and/or an operator.

In further addition to this or as a further alternative, as it can be seen from optional step 108 of Fig. 2, the method may further comprise the step of employing a server, preferably a tile server, to simplify and/or accelerate display of the respective spectrum and/or spectrogram information.

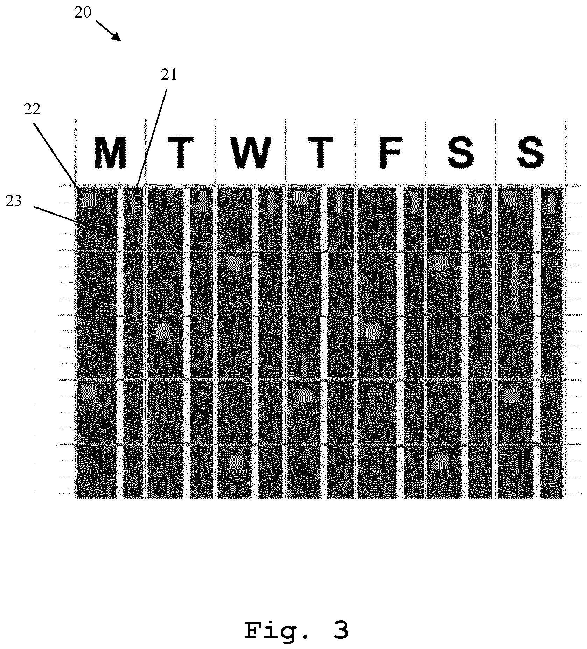

Now, with respect to Fig. 3, an exemplary embodiment of a graphical user interface 20 in the sense of the invention is illustrated, which may especially be configured to support and/or perform at least one of the steps of the method described above.

As already mentioned above, the planning structure according to the method may especially comprise or be a visual planning structure, preferably a visual planning structure with time structuring, more preferably a calendar-like visual planning structure, most preferably a calendar. Exemplarily, in accordance with Fig. 3, the planning structure is a calendar. In other words, the graphical user interface 20 comprises a calendar.

Said graphical user interface 20 of Fig. 3 or said corresponding calendar, respectively, shows the seven days of the week, wherein different events, such as exemplary events 21, 22, 23, or actions, respectively, have been entered especially in the context of spectrum monitoring.

With respect to the graphical user interface 20 or the corresponding calendar, respectively, it is noted that such a graphical user interface advantageously allows for an easier identification of certain patterns for a human being or operator, respectively.

Accordingly, the method described above may further comprise the step of identifying a pattern, especially a certain pattern or a predefined pattern or a repetitive pattern, preferably with respect to the at least one monitoring event and/or action especially through a corresponding operator.

Further advantageously, such a graphical user interface 20 allows for detecting and/or classifying at least one corresponding signal especially by using a detector or a deep detector, respectively, preferably in an offline manner.

Accordingly, the method described above may further comprise the step of employing a detector, preferably a deep detector, to detect and/or classify at least one corresponding signal especially in an offline manner.

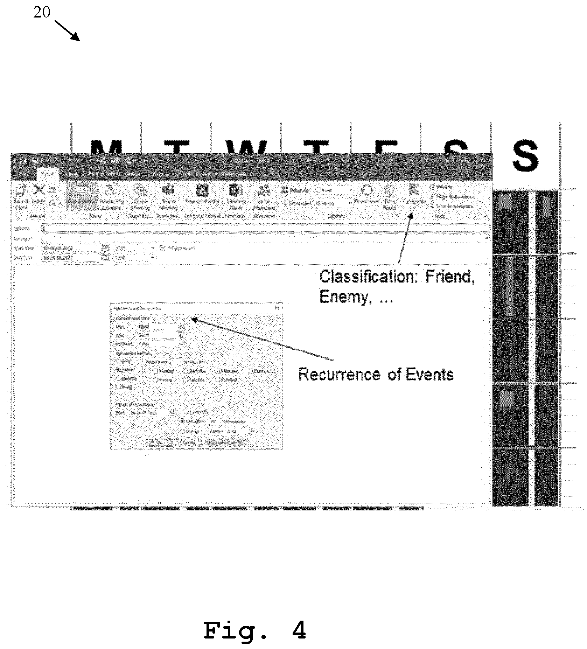

In accordance with Fig. 4, a further advantage of the graphical user interface is illustrated. In this context, it is noted that events or monitoring events, respectively, can easily be defined especially like in a calendar and/or can be classified accordingly.

As it can further be seen from Fig. 4, exemplarily a recurrence of events can be defined, whereas a classification of events may especially comprise signals to be recorded preferably in the sense of a whitelist, or signals to be ignored preferably in the sense of a blacklist.

With respect to the method described above, it is noted that said method may further comprise the step of defining monitoring events especially like in a calendar and/or classifying said monitoring events.

As a further benefit, it is noted that a server, preferably a tile server, more preferably a spectrum tile server, can be reused for different resolutions in the graphical user interface 20 or in the context of the method described above, respectively.

Accordingly, said method may further comprise the step of reusing a server, preferably a tile server, more preferably a spectrum tile server, for different resolutions in the planning structure.

Further advantageously, the graphical user interface 20 can easily be combined with a planner, preferably a task planner.

In this context, with respect to the method described above, the method may further comprise the step of combining the planning structure with a planner, preferably a task planner.

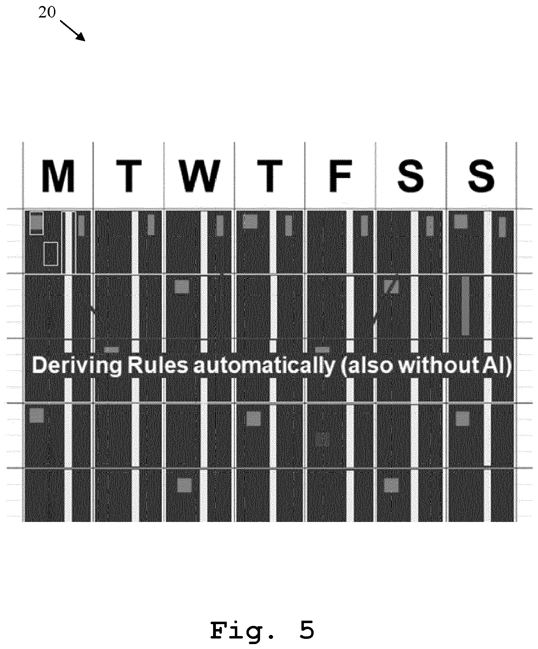

According to Fig. 5, especially on the basis of the graphical user interface 20, rules and/or commands can automatically be derived especially with or without employing artificial intelligence.

Accordingly, the method described above may further comprise the step of automatically deriving the at least one rule and/or command especially with or without employing artificial intelligence.

Additionally or alternatively, said method may further comprise the step of automatically deriving the at least one rule and/or command, preferably at least one customer rule and/or costumer command, especially without requiring query expertise preferably by defining relevant monitoring events and/or actions.

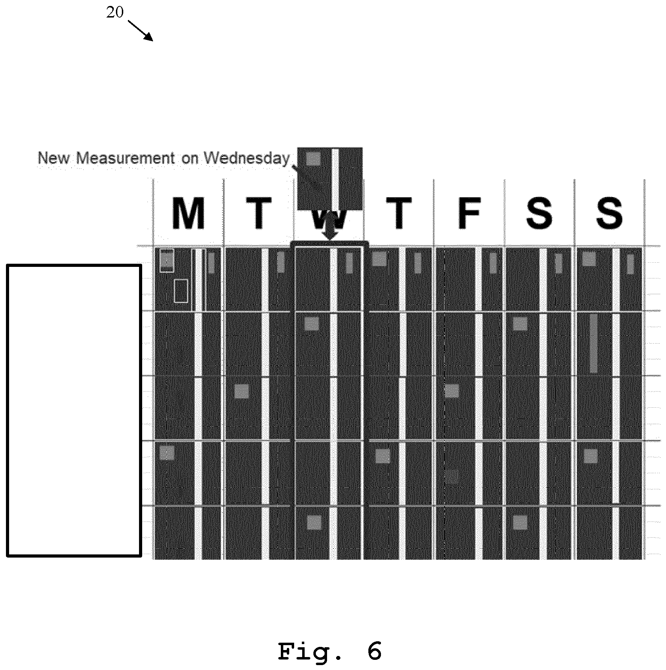

Moreover, according to Fig. 6, a further advantage with respect to the graphical user interface 20 or the above-mentioned planning structure, respectively, is illustrated. In this context, especially within the scope of a new measurement, such as on Wednesday, an anomaly detection is possible by comparing rules and/or comparing images.

Accordingly, the method described above may further comprise the step of especially in the context of a new measurement regarding spectrum monitoring, performing an anomaly detection by comparing the at least rule and/or command and/or by comparing images preferably with respect to the planning structure.

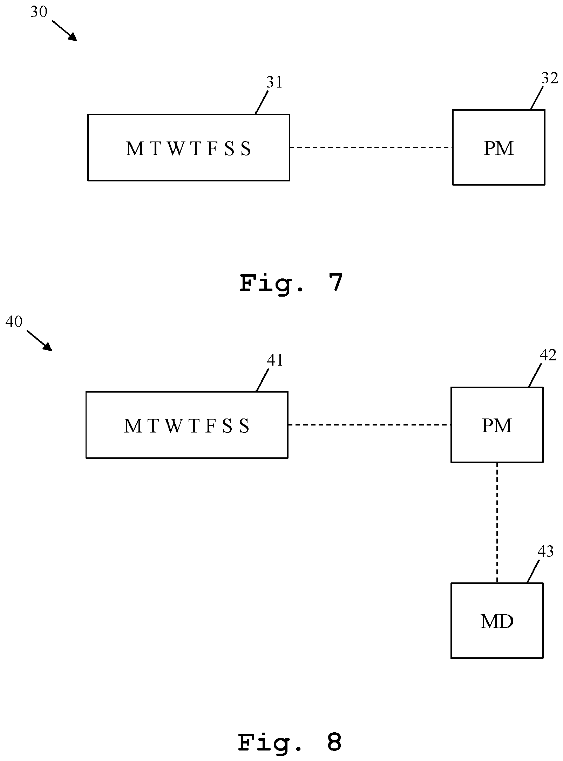

Now, with respect to Fig. 7, an exemplary embodiment of the inventive scheduling system 30 for planning monitoring tasks in the context of spectrum monitoring is illustrated.

Said scheduling system 30 comprises a graphical user interface 31 comprising a planning structure, exemplarily a calendar, and a processing module 32. In this context, the graphical user interface 31 is configured to be entered at least one monitoring event and/or action into the planning structure. Additionally, the processing module 32 is configured to create at least one rule and/or command on the basis of the at least one monitoring event and/or action.

It is noted that said graphical user interface 31 of Fig. 7 can be the above-mentioned graphical user interface 20 of Fig. 3 to Fig. 6, and vice versa.

As it can further be seen from Fig. 7, the processing module 32 is in communication with the graphical user interface 31.

In this context, the graphical user interface 31 may be directly coupled to the processing module 32, preferably the graphical user interface 31 may be comprised by display means being directly coupled to the processing module32.

Alternatively, the graphical user interface 31 may be remotely coupled, preferably via a wireless connection and/or a cloud service, to the processing module 32.

It is noted that the graphical user interface 31 may be configured to support and/or perform at least one of the steps of the method described above.

It is further noted that the processing module 32 may be configured to support and/or perform at least one of the steps of the method described above.

Furthermore, with respect to Fig. 8, an exemplary embodiment of the inventive system 40 for planning monitoring tasks in the context of spectrum monitoring, especially the inventive system for planning monitoring tasks in the context of spectrum monitoring and performing spectrum monitoring, is depicted.

Said system 40 comprises a graphical user interface 41 comprising a planning structure, exemplarily a calendar, a processing module 42, and a monitoring device 43. In this context, the graphical user interface 41 is configured to be entered at least one monitoring event and/or action into the planning structure. Additionally, the processing module 42 is configured to create at least one rule and/or command on the basis of the at least one monitoring event and/or action, wherein the processing module 42 is further configured to provide the at least one rule and/or command for the monitoring device 43. In addition to this, the monitoring device 43 is configured to record at least one signal in the context of spectrum monitoring on the basis of the at least one rule and/or command.

It is noted that the graphical user interface 41 of Fig. 8 can be the graphical user interface 31 of Fig. 7 or the graphical user interface 20 of Fig. 3 to Fig. 6, respectively, and vice versa.

It is further noted that the processing module 42 of Fig. 8 can be the processing module 32 of Fig. 7, and vice versa.

Furthermore, the graphical user interface 41 may be configured to support and/or perform at least one of the steps of the method described above.

Moreover, the processing module 42 may be configured to support and/or perform at least one of the steps of the method described above.

With respect to the monitoring device 43, it is noted that said monitoring device 43 may be configured to support and/or perform at least one of the steps of the method described above.

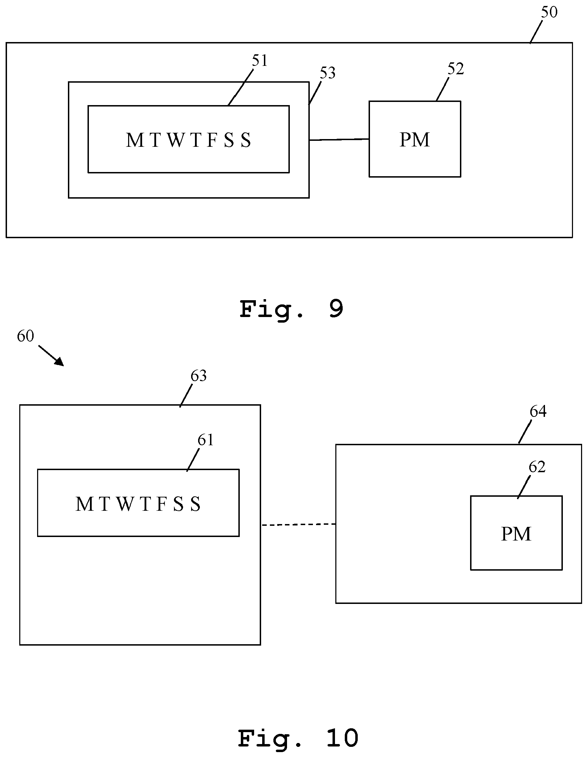

Now, with respect to Fig. 9, an exemplary embodiment of a monitoring device 50 in the sense of the invention is illustrated.

Said monitoring device 50 comprises display means 53 comprising a graphical user interface 51, exemplarily a calendar, such as the above-mentioned graphical user interfaces 20, 31, 41, and a processing module 52, such as the above-mentioned processing modules 32, 42, being connected to the display means 53.

Fig. 10 depicts a further exemplary embodiment 60 of the inventive system. In this context, a computing device 63, such as a personal computer or a tablet or a smart phone, comprises a graphical user interface 61, exemplarily a calendar, such as the above-mentioned graphical user interfaces 20, 31, 41, 51, wherein the computing device 63 is connected to a monitoring device 64, such as the above-mentioned ones, comprising a processing module 62, such as the above-mentioned processing modules 32, 42, 52.

Said connection between the computing device 63 and the monitoring device 64 can be a wireless connection, a wired connection, a connection via a server or servers, or any combination thereof.

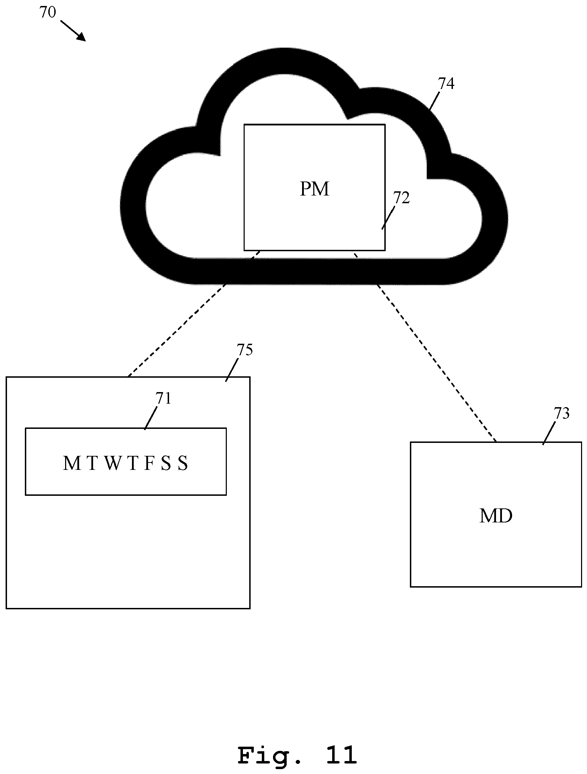

Finally, Fig. 11 shows a further exemplary embodiment 70 of the inventive system.

Said system 70 comprises a computing device 75, such as the above-mentioned computing device 63 comprising a graphical user interface 71, exemplarily a calendar, such as the graphical user interfaces 20, 31, 41, 51, 61, a cloud server or service 74 comprising a processing module 72, such as the processing modules 32, 42, 52, 62, and a monitoring device 73, such as the above-mentioned ones.

As it can further be seen from Fig. 11, the computing device 75 is connected to the processing module 72, whereas said processing module 72 is connected to the monitoring device 73. Said connections can be wireless connections, wired connections, connections via a server or servers, or any combination thereof.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A method for planning spectrum monitoring tasks, the method comprising the steps of:
entering (100) at least one monitoring event and/or action into a planning structure, and
creating (101) at least one rule and/or command on the basis of the at least one monitoring event and/or action.

2. The method according to claim 1,
wherein the planning structure comprises or is a visual planning structure, preferably a visual planning structure with time structuring, more preferably a calendar-like visual planning structure, most preferably a calendar.

3. The method according to claim 1 or 2,
wherein the method further comprises the step of providing (102) the at least one rule and/or command for a monitoring device or system, wherein the at least one rule and/or command is preferably translated into a script or machine readable code especially in an automatic manner.

4. The method according to any of the claims 1 to 3, wherein the at least one rule and/or command comprises or is a definition which signal or signals will be recorded in the context of spectrum monitoring.

5. The method according to any of the claims 1 to 4, wherein the at least one rule and/or command comprises or is a definition which signal or signals will be ignored in the context of spectrum monitoring.

6. The method according to any of the claims 1 to 5, wherein the at least one rule and/or command comprises or is a definition which signal or signals in the context of spectrum monitoring will trigger an alarm preferably due to anomalies or deviations from a corresponding signal definition especially input by the respective operator.

7. The method according to any of the claims 1 to 6, wherein the method further comprises the step of recording (103) at least one signal in the context of spectrum monitoring for a predefined period of time as recorded results especially on the basis of the at least one monitoring event and/or action.

8. The method according to claim 7,
wherein the method further comprises the step of:
viewing (104) the recorded results, and/or
deciding (105) which of the recorded results are to be further processed in which manner.

9. The method according to any of the claims 1 to 8, wherein the method further comprises the step of loading (106) at least one of the at least one monitoring event and/or action from operator and/or manufacturer records.

10. The method according to any of the claims 1 to 9, wherein the method further comprises the step of preprocessing and/or reprocessing (107) at least one of the at least one monitoring event and/or action especially with the aid of a system and/or a device and/or an operator.

11. The method according to any of the claims 1 to 10,
wherein the method further comprises the step of employing (108) a server, preferably a tile server, to simplify and/or accelerate display of the respective spectrum and/or spectrogram information.

12. A graphical user interface (20, 31, 41, 51, 61, 71) for planning spectrum monitoring tasks, the graphical user interface (20, 31, 41, 51, 61, 71) being configured to support and/or perform at least one of the steps of the method according to any of the claims 1 to 11.

13. A scheduling system (30) for spectrum monitoring tasks, the scheduling system (30) comprising:
a graphical user interface (31) comprising a planning structure, and
a processing module (32),
wherein the graphical user interface (31) is configured to be entered at least one monitoring event and/or action into the planning structure, and
wherein the processing module (32) is configured to create at least one rule and/or command on the basis of the at least one monitoring event and/or action.

14. The scheduling system (30) according to claim 13, wherein the graphical user interface (31) is directly coupled to the processing module (32), preferably the graphical user interface is comprised by display means being directly coupled to the processing module, or
wherein the graphical user interface (31) is remotely coupled, preferably via a wireless connection and/or a cloud service, to the processing module (32).

15. A system (40, 50, 60, 70) for planning monitoring tasks in the context of spectrum monitoring, the system (40, 50, 60, 70) comprising:
a graphical user interface (41, 51, 61, 71) comprising a planning structure,
a processing module (42, 52, 62, 72), and
a monitoring device (43, 50, 64, 73),
wherein the graphical user interface (41, 51, 61, 71) is configured to be entered at least one monitoring event and/or action into the planning structure,
wherein the processing module (42, 52, 62, 72) is configured to create at least one rule and/or command on the basis of the at least one monitoring event and/or action,
wherein the processing module (42, 52, 62, 72) is further configured to provide the at least one rule and/or command for the monitoring device (43, 50, 64, 73), and
wherein the monitoring device (43, 50, 64, 73) is configured to record at least one signal in the context of spectrum monitoring on the basis of the at least one rule and/or command.
